# EUROPEAN PATENT APPLICATION

(11) **EP 3 975 663 A1**
(43) Date of publication of application: **30.03.2022**
(21) Application number: 21198697.1
(22) Date of filing: 23.09.2021
(51) Int. Cl.: H05B 6/06

(54) **TEMPERATURE SENSOR ASSEMBLY FOR INDUCTION COOKTOP**

(30) Priority: 25.09.2020 IN 202011041810
(71) Applicant: Whirlpool Corporation, Benton Harbor, MI 49022 (US)
(72) Inventor: Baldo, Salvatore, 21024 Cassinetta di Biandronno (VA) (IT); Gallivanoni, Andrea, 21024 Cassinetta di Biandronno (VA) (IT); Manohar, Ajit, 21024 Cassinetta di Biandronno (VA) (IT); Parachini, Davide, 21024 Cassinetta di Biandronno (VA) (IT); Pastore, Cristiano Vito, 21024 Cassinetta di Biandronno (VA) (IT)
(74) Representative: Spina, Alessandro

(57) **Abstract**

An induction cooking apparatus including a cooktop panel, induction coil, controller, and temperature sensor assembly. A temperature sensor and guiding support are positioned in sliding engagement in an opening in the center of the induction coil where an upper end of the temperature sensor sits above a top surface of the induction coil. The controller includes a first circuit board that supplies electricity to the induction coil. A second circuit board, separate from the first circuit board, is electrically connected to the temperature sensor and includes a cantilevered leaf-spring structure that supports the temperature sensor. The guiding support is a load bearing structure that transmits a biasing force created by deflection of the cantilevered leaf-spring structure to the temperature sensor, which operates to hold the temperature sensor in contact with a lower surface of the cooktop panel.

## Description

### FIELD

The present disclosure relates generally to cooktops, including for example induction cooktops used in residential and commercial kitchens. The present disclosure also relates more specifically to a temperature sensor assembly for a cooktop.

### BACKGROUND

The statements in this section merely provide background information related to the present disclosure and may not constitute prior art.

Induction cooktops are kitchen appliances that exploit the phenomenon of induction heating for food cooking purposes. Conventional induction cooktops include a cooktop panel that is made of glass or a glass-ceramic material. In use, cookware such as pots and pans are positioned on the cooktop panel. Induction cooktops operate by generating an electromagnetic field in a cooking region above the cooktop panel. The electromagnetic field is generated by one or more induction coils made of copper wire, which are driven by a controller that supplies an oscillating electric current to the induction coils. The electromagnetic field induces a parasitic current inside a pot or pan positioned in the cooking region. In order to efficiently heat food utilizing the electromagnetic field, the pot or pan should be made of an electrically conductive ferromagnetic material. The parasitic current circulating in the pot or pan produces heat by Joule effect dissipation. As such, heat is generated only within the pot or pan without directly heating the cooktop panel upon which the pot or pan is placed.

Induction cooktops have a better efficiency than electric cooktops. For example, heating cookware via induction provides for a greater fraction of absorbed energy that is converted into heat that heats the cookware. In operation, the presence of the cookware on the cooktop causes magnetic flux close to the pot or pan resulting in cooking energy being transferred to the cookware. While the primary focus of this disclosure is on induction cooktops, it should be appreciated that the temperature sensor assembly disclosed herein may find utility in other types of cooktops and other consumer appliances. Therefore, it should be understood that the present disclosure is not limited to induction cooktops only.

### SUMMARY

This section provides a general summary of the disclosure, and is not a comprehensive disclosure of its full scope or all of its features.

In accordance with one aspect of the present disclosure, an induction cooking apparatus is described, where the induction cooking apparatus includes an induction coil, a controller, and a temperature sensor. The induction coil includes a top surface and a bottom surface and the temperature sensor includes an upper end that sits above the top surface of the induction coil. The controller may include a first circuit board that is electrically connected to the induction coil and that is configured to supply electricity to the induction coil. The induction cooking apparatus also includes a second circuit board that is electrically connected to the temperature sensor. The second circuit board is separate from the first circuit board and includes a cantilevered leaf-spring structure that supports the temperature sensor. In other words, the first and second circuit boards are physically separated and the second circuit board acts as a standalone circuit board for the temperature sensor.

In accordance with another aspect of the present disclosure, the induction coil may further include an opening that extends through the induction coil from the top surface to the bottom surface. According to this aspect of the disclosure, the temperature sensor is positioned in the opening of the induction coil. It should further be appreciated that multiple induction coils and corresponding temperature sensors may be packaged together in an array for a single cooktop. Advantageously, the cantilevered leaf-spring structure holds the upper end of the temperature sensor flat against a lower surface of a cooktop panel for accurate temperature readings. Because the cantilevered leaf-spring structure is flexible and applies a biasing force to the temperature sensor when flexed, it is configured to accommodate dimensional variations due to manufacturing tolerances and/or the thermal expansion and contraction of components of the cooktop.

By including a second circuit board for the temperature sensor(s), which is separate and distinct from the first circuit board powering the induction coil(s), several advantages are realized. First, packaging constraints on the first circuit board that is electrically connected to the induction coil(s) make it difficult to find room for the cantilevered leaf-spring structure(s) that are connected to the temperature sensor(s). In other words, space is at a premium on the first circuit board powering the induction coil(s). By providing a second circuit board for the temperature sensor(s), sufficient room can be provided on that circuit board for the cantilevered leaf-spring structure(s). In addition, the thickness and material composition of the second circuit board can be selected to specifically provide the desired mechanical properties of the cantilevered leaf-spring structure(s). Because the first circuit board supports many other electrical components, cost and other factors provide constraints of the thickness and material composition of the first circuit board, which are not present when a second, standalone, circuit board is added for the temperature sensors. In addition, it is easier and cheaper to manufacture the cantilevered leaf-spring structure(s) on a second, standalone circuit board compared to trying to incorporate the cantilevered leaf-spring structure(s) on the first circuit board that powers the induction coil(s). Finally, by providing a separate circuit board for the temperature sensors, the cooktop is easier and cheaper to service if a temperature sensor malfunctions because the second circuit board can be replaced more easily and cheaply than the first circuit board to power the induction coils. In addition, the cooktop is also easier and cheaper to assemble, since the temperature sensors, being mounted on a dedicated circuit board, can be assembled by machine instead of by hand, and the whole temperature sensor assembly can then be assembled together with the coil beam assembly.

In accordance with yet another aspect of the present disclosure, a temperature sensor assembly is described where the temperature sensor assembly includes a temperature sensor, a circuit board, and a guiding support. The temperature sensor has an upper end, a lower end, a flange, and one or more wires that extend from the lower end of the temperature sensor. The circuit board includes an electrical circuit that is disposed on a substrate. The circuit board includes a cantilevered leaf-spring structure that is integral with the substrate and that extends to a cantilever end. The wire(s) of the temperature sensor are electrically connected to the electrical circuit at the cantilever end of the cantilevered leaf-spring structure of the circuit board. The guiding support has a top end, a bottom end, and a tubular structure that circumscribes at least a portion of the temperature sensor in a clearance fit. The top end of the guiding support is disposed in contact with the flange of the temperature sensor and the bottom end of the guiding support is disposed in contact with the cantilever end. The substrate is made of a resilient material such that the cantilevered leaf-spring structure of the circuit board provides a biasing force when flexed that is transmitted through the guiding support to the flange at the upper end of the temperature sensor.

In accordance with this particular arrangement, the guiding support is free to slide, tilt, and gimbal relative to the temperature sensor while remaining a load bearing structure that transmits the biasing force created by the deflection of the cantilevered leaf-spring structure to the flange of the temperature sensor. Advantageously, this takes the load off the temperature sensor and specifically the connection between the wire(s) at the lower end of the temperature sensor and the cantilever end. The connection between the wire(s) at the lower end of the temperature sensor and the cantilever end may be, for example, a soldered connection, which can fail under load. Manufacturing is also simplified because the temperature sensor assembly can be assembled separately from the coil beam assembly.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is a top plan view of an exemplary cooktop;
Figure 2 is a top perspective view of an exemplary coil beam assembly that is constructed in accordance with the teachings of the present disclosure;
Figure 3 is an exploded perspective view of an exemplary cooktop panel, the exemplary coil beam assembly illustrated in Figure 2, and an exemplary controller;
Figure 4 is a front cross-sectional view of the exemplary cooktop panel, coil beam assembly, and controller illustrated in Figure 3;
Figure 5 is a bottom perspective view of the exemplary cooktop panel, coil beam assembly, and controller illustrated in Figure 3;
Figure 6A is a side cross-sectional view of a portion of the exemplary coil beam assembly illustrated in Figure 3 where a cantilevered leaf-spring structure of a circuit board is shown in an unflexed position;
Figure 6B is a perspective section view of a portion of the exemplary coil beam assembly illustrated in Figure 3 where the cantilevered leaf-spring structure of the circuit board is shown in the unflexed position;
Figure 7A is a side cross-sectional view of a portion of the exemplary cooktop panel and coil beam assembly illustrated in Figure 3 where the cantilevered leaf-spring structure of the circuit board is shown in a flexed position;
Figure 7B is a perspective section view of a portion of the exemplary coil beam assembly illustrated in Figure 3 where the cantilevered leaf-spring structure of the circuit board is shown in the flexed position;
Figure 8 is an exploded perspective section view of a portion of the exemplary coil beam assembly illustrated in Figure 3;
Figure 9 is a top perspective view of an exemplary temperature sensor assembly that is constructed in accordance with the present disclosure, which includes an exemplary temperature sensor and the cantilevered leaf-spring structure of the circuit board shown in Figures 6A and 6B; and
Figure 10 is a bottom perspective view of an exemplary guiding support of the temperature sensor assembly described in the present disclosure.

### DETAILED DESCRIPTION

Referring to the Figures, wherein like numerals indicate corresponding parts throughout the several views, an induction cooking apparatus 20 and temperature sensor assembly 22 for a cooktop 24 are illustrated.

Example embodiments will now be described more fully with reference to the accompanying drawings. Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

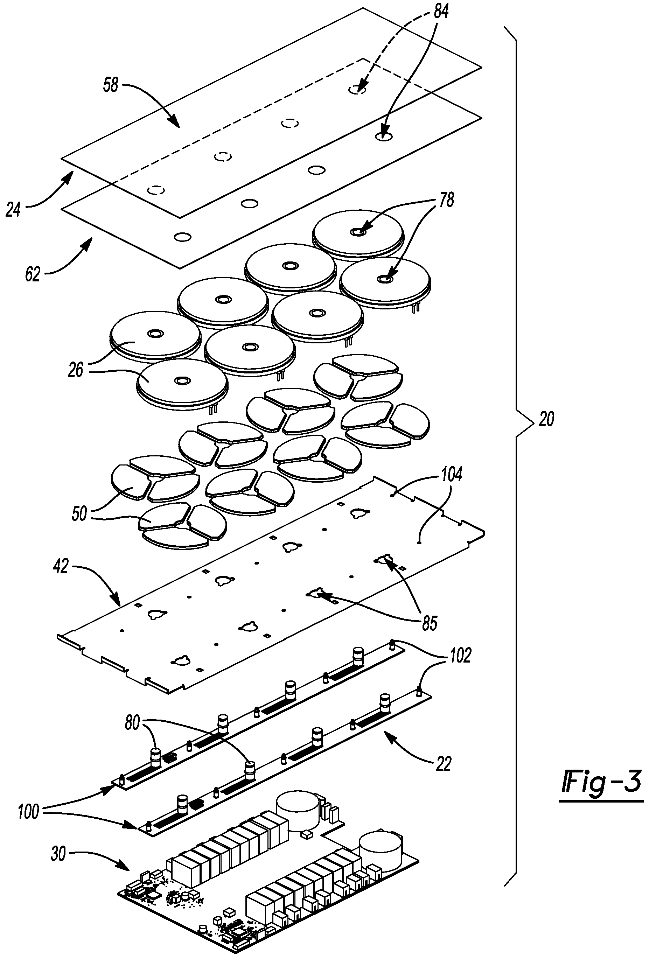

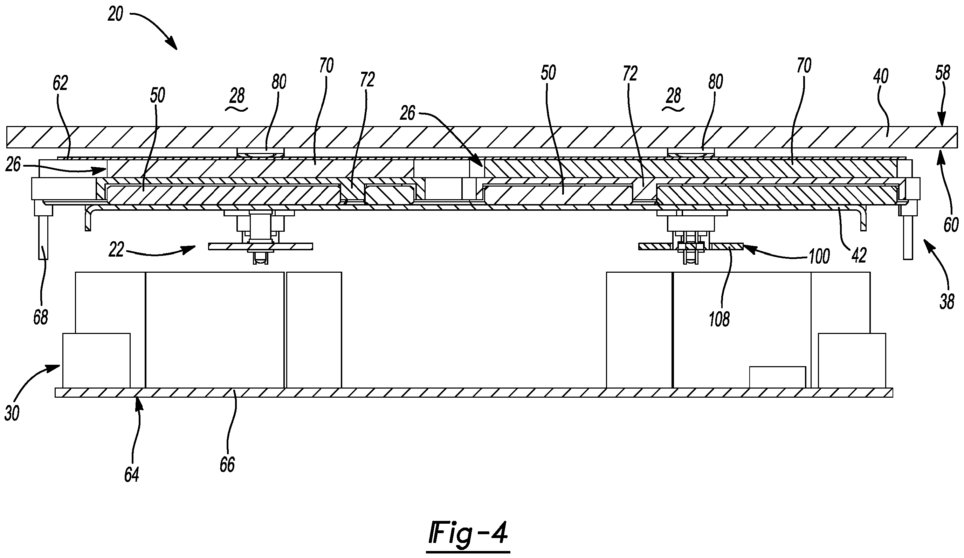

For purposes of description herein the terms "upper," "lower," "top," "bottom," "vertical," "horizontal," and derivatives thereof shall relate to the device as oriented in Figures 3 and 4. However, it is to be understood that the apparatus and assemblies described herein may assume various alternative orientations.

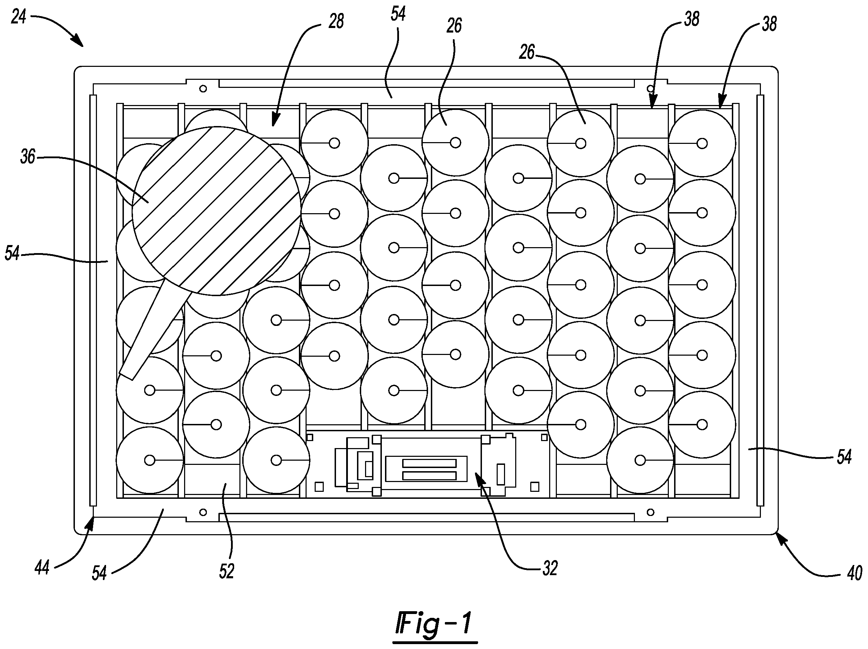

Referring to Figure 1, the cooktop **24** is shown, as seen from above. In the illustrated embodiment, the cooktop **24** is an induction cooktop that includes an array of induction coils **26** distributed over a cooking region **28.** Notwithstanding the illustrated example and the description set forth herein, it should be appreciated that the temperature sensor assembly **22** described herein is not necessarily limited to cooktops that are configured for induction heating and may find utility in other cooktop and consumer appliance applications.

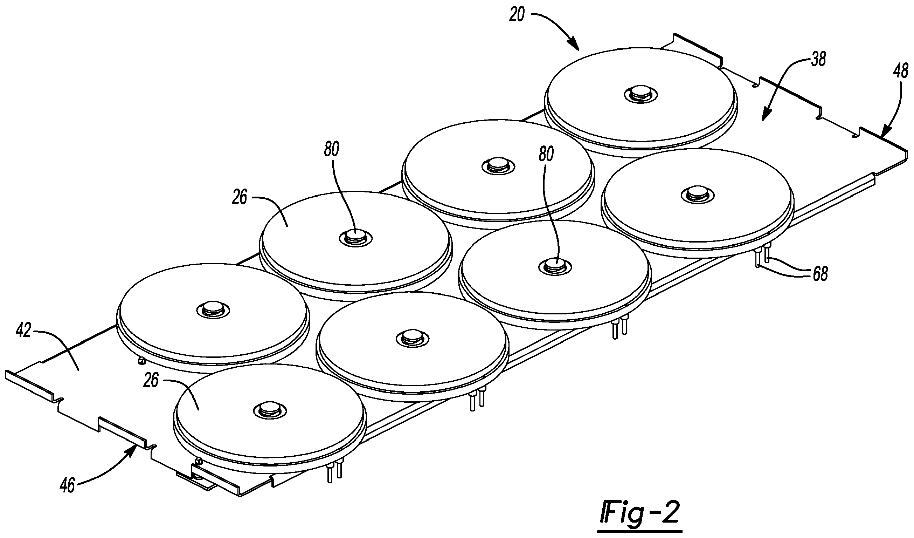

With additional reference to Figures 2 and 3, the induction coils **26** are electrically connected to a controller **30.** The controller **30** is configured to supply electricity to the induction coils **26.** In other words, the controller **30** can selectively activate (i.e. turn on and turn off) the induction coils **26** in response to an input to a user interface **32** that is electrically connected to the controller **30.** Optionally, the controller **30** may activate one or more cooking regions **28** formed by the induction coils **26** in response to an input or user selection. As such, the controller **30** may comprise a first electrical circuit **34** that is electrically connected to the induction coils **26.** In operation, the first electrical circuit **34** supplies electricity to the induction coils **26** and may include switching devices (e.g. solid state switches) that are configured to generate variable frequency/variable amplitude electric current that is fed to the induction coils **26.** In this configuration, the induction coils **26** may be driven such that an electromagnetic field is generated to heat cookware **36** (e.g. pans, pots, etc.) that is placed in an activated cooking region **28.**

In some embodiments, the induction coils **26** may be independently activated (i.e., turned on) by the controller **30.** Activation of the induction coils **26** may be in response to a user defined heat setting received via the user interface **32** in conjunction with a detection of cookware **36** in the cooking region **28.** In response to the user defined setting and the detection of the cookware **36,** the controller **30** may activate the induction coils **26** that are covered or partially covered by the cookware **36.** Accordingly, the cooktop **24** may provide for the cooking region(s) **28** to be selectively energized providing for a plurality of flexible cooking regions or zones that is sometimes referred to as "cook anywhere" functionality.

The user interface **32** may include one or more of the following components, a dial, touchpad, a digital read out, a digital display, and a touchscreen display. For example, the user interface **32** may correspond to a touch interface configured to perform heat control and selection of the induction coils **26** for a cooking operation. The user interface **32** may comprise a plurality of sensors configured to detect the presence of a finger of an operator proximate thereto. The sensors of the user interface **32** may correspond to various forms of sensors. For example, the sensors of the user interface may correspond to capacitive, resistive, and/or optical sensors. In some embodiments, the user interface **32** may further comprise a display configured to communicate at least one function of the cooktop **24.** The display may correspond to various forms of displays, for example, a light emitting diode (LED) display, a liquid crystal display (LCD), etc. In some embodiments, the display may correspond to a segmented display configured to depict one or more alpha-numeric characters to communicate a cooking function of the cooktop **24.** The display may further be operable to communicate one or more error messages or status messages from the controller **30.**

In some embodiments, the induction coils **26** may be grouped to form coil beam assemblies **38.** The coil beam assemblies **38** may be arranged in an alternating, staggered, or complementary arrangement comprising a plurality of coil beam assemblies **38** that are favorably arranged to position the induction coils **26** at evenly spaced or distributed locations in the array. Such even spacing allows the induction coils **26** to evenly distribute cooking energy over the cooking region(s) **28.**

As discussed herein, the cooktop **24** may comprise a variety of novel components, both structural and electrical, that provide for improved quality and performance, ease of manufacturing benefits, and cost savings. Though the cooktop **24,** induction cooking apparatus **20,** and temperature sensor assembly **22** described herein are discussed in reference to specific examples, various components of these assemblies may be implemented alone or in combination.

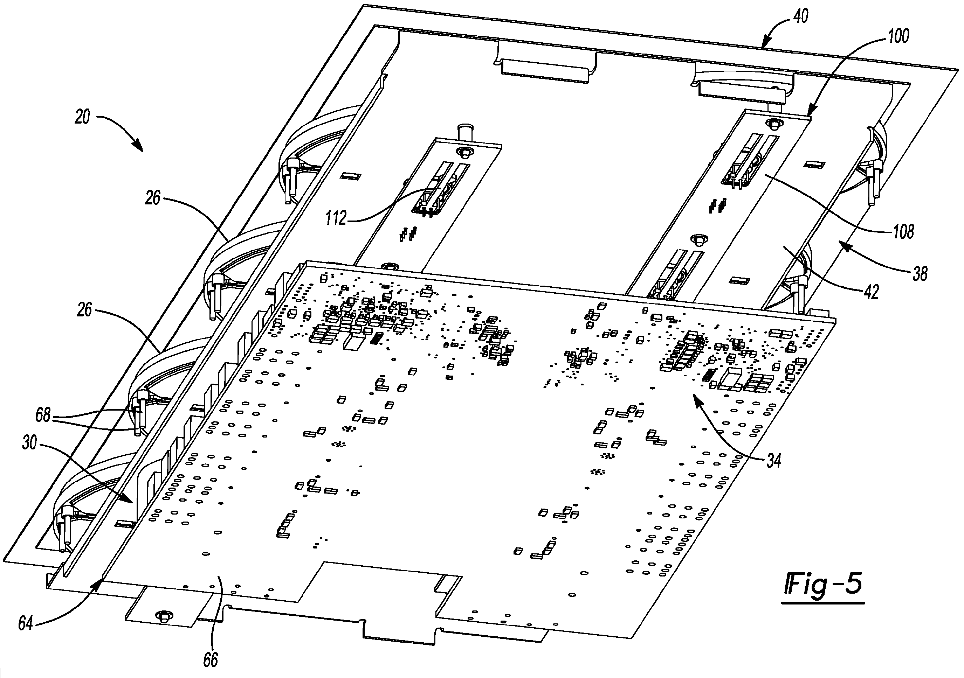

With further reference to Figures 4 and 5, the larger induction cooking apparatus **20** is illustrated, which includes the coil beam assembly **38,** cooktop panel **40,** controller **30,** and temperature sensor assembly **22.** Each of the induction coils **26** included on one of the coil beam assemblies **38** is mounted above and supported on a beam **42** that extends horizontally/laterally across a burner box **44** of the cooktop **24** between a first beam end **46** and a second beam end **48.** The beam **42** may be made from a variety of different materials; however, the beam **42** is preferably made of a non-ferromagnetic material like aluminum, for example, such that the beam **42** is not influenced by the induction coils **26** that it supports. Optionally, ferrite foils **50** may be positioned between each induction coil **26** and the beam **42** to direct the electromagnetic field up towards the cooking region **28.**

Although other configurations are possible, the burner box **44** may include a bottom wall **52** and one or more side walls **54** that extend upwardly from the bottom wall **52.** Accordingly, the burner box **44** may be substantially rectangular in form and may form an enclosure having an internal cavity configured to house various components of the cooktop **24,** including the coil beam assemblies **38.** The coil beam assemblies **38** may be supported by the side walls **54** of the burner box **44,** where the first and second beam ends **46, 48** engage the side walls **54** of the burner box **44.** Alternatively, the coil beam assemblies **38** may be supported in the burner box **44** by a frame or other structure that is supported by the bottom wall **52** and/or side walls **54** of the burner box **44.**

The coil beam assemblies **38** extend in complementary parallel groups beneath the cooktop panel **40.** The cooktop panel **40** may be made of glass or a glass-ceramic material and includes an upper surface **58** and a lower surface **60.** Optionally, a mica sheet **62** may be provided between the lower surface **60** of the cooktop panel **40** and the induction coils **26** to provide insulation. The upper surface **58** of the cooktop panel **40** is configured to support cookware **36** of various shapes and sizes and therefore acts as the cooking surface. The induction coils **26,** together with the ferrite foils **50,** concentrate a field of electromagnetic flux above the upper surface **58** of the cooktop panel **40** in the cooking region(s) **28.**

The controller **30** is positioned beneath the coil beam assembly **38.** The controller **30** includes a first circuit board **64** that is electrically connected to the induction coils **26** in the coil beam assembly **38.** The first circuit board **64** may be a printed circuit board (PCB) that includes the first electrical circuit **34,** which is printed as conductive traces on a first substrate **66** that forms the first circuit board **64.** By way of non-limiting example, some materials that may be utilized for the first substrate **66** include, but are not limited to: FR-1, FR-4, FR-5, G-10, and G-11.

The first electrical circuit **34** of the controller **30** is configured to generate one or more high frequency switching signals. The switching signals cause the induction coils **26** to generate the electromagnetic field in cookware **36** placed on the upper surface **58** of the cooktop panel **40.** Due to this functionality, the controller **30** may also be referred to as an inverter or an induction power converter. The first electrical circuit **34** includes a plurality of conductive connections and is configured to communicate control signals and/or driving current to the induction coils **26.** The conductive connections of the first electrical circuit **34** are arranged in electrical communication with the induction coils **26** via one or more electrical connectors **68** that are electrically connected to copper windings **70** forming the induction coils **26.** The electrical connectors **68** may correspond to lead wires (as illustrated) or fast-connect terminals (e.g., "faston" connectors). If the latter option is utilized, the conductive connections of the first electrical circuit **34** may be configured as female terminals and the electrical connectors **68** on the induction coils **26** may be configured as male terminals or vice versa to establish an electrical connection between the first electrical circuit **34** and the induction coils **26.**

The copper windings **70** of the induction coils **26** may be wound on coil formers **72.** Each coil formers **72** may be, for example, a plastic bobbin or housing. In some embodiments, the copper windings **70** of each induction coil **26** may be wound on one coil former **72.** The first electrical circuit **34** may extend along a length of the beam **42** such that the conductive contacts of the first electrical circuit **34** are aligned with the electrical connectors **68** on each induction coil **26.** For example, in some embodiments, the induction coils **26** in each coil beam assembly **38** may share a single electrical circuit **34.**

During assembly, the coil beam assemblies **38** are positioned over the first circuit board **64** with the electrical connectors **68** of the induction coils **26** aligned with the corresponding conductive contacts of the first electrical circuit **34.** Then the coil beam assemblies **38** are lowered such that electrical connectors **68** of the induction coils **26** engage the corresponding conductive contacts of the first electrical circuit **34.** The controller **30,** including the first circuit board **64,** may be mounted to and supported by the bottom wall **52** of the burner box **44** or positioned in a plastic support tray. As previously discussed, the beam **42** is mounted in the burner box **44** at a position that is spaced above the first circuit board **64.**

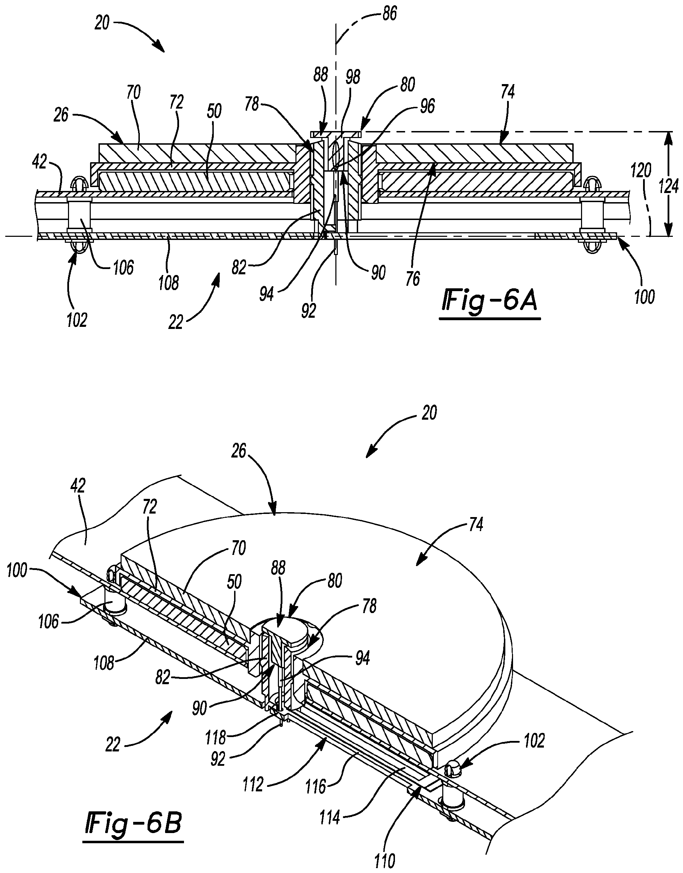

As shown in Figures 6A and 6B, each induction coil **26** includes a top surface **74,** a bottom surface **76,** and an opening **78.** The opening **78** extends through the induction coil **26** from the top surface **74** to the bottom surface 76. Although other configurations are possible, each induction coil **26** has a circular, disk-like shape and the opening **78** is located at the center of the induction coil **26.** The induction cooking apparatus **20** further includes a temperature sensor **80** for each induction coil **26** that is positioned in the opening **78** of the induction coil **26.** A guiding support **82** is also positioned in the opening **78** of the induction coil **26.** The temperature sensor **80** and the guiding support **82** are arranged in a clearance fit with one another and the opening **78** such that both the temperature sensor **80** and the guiding support **82** are free to move, slide, and tilt within the opening **78** in the induction coil **26.** It should also be appreciated that both the beam **42** and the mica sheet **62** have apertures **84, 85** that are aligned with the openings **78** in the induction coils **26** through which the temperature sensor **80** may extend.

The temperature sensor **80** extends axially along a temperature sensor axis **86** between an upper end **88** and a lower end **90.** The upper end **88** of the temperature sensor **80** sits above the top surface **74** of the induction coil **26** and the lower end **90** of the temperature sensor **80** includes one or more wires **92.** Optionally, each wire **92** may be encased in an insulator sleeve **94** along part of their length. In some embodiments, the temperature sensors **80** may correspond to negative temperature coefficient (NTC) sensors configured to adjust a resistance based on a temperature proximate to each temperature sensor **80.** For example, each temperature sensor **80** may include a thermistor **96** and a sensor enclosure **98** that surrounds at least a portion of the thermistor **96.** The sensor enclosure **98** protects the thermistor **96** and may optionally act as an electrical insulator. In operation, the temperature sensors **80** communicate temperature signals for the induction coils **26.** These temperature signals are utilized for temperature control and regulation purposes.

The induction cooking apparatus **20** further includes a second circuit board **100,** separate from the first circuit board **64,** that is electrically connected to the temperature sensor(s) **80.** In other words, the induction cooking apparatus **20** has a second, standalone circuit board **100,** that together with the temperature sensor **80** and guiding support **82,** form the temperature sensor assembly **22** described herein. The second circuit board **100** is mounted above the first circuit board **64** and below the induction coil **26.** More specifically, the second circuit board **100** is mounted below the beam **42** and is supported by the beam **42.** In some embodiments, connection fixtures **102** are used to connect the second circuit board **100** to the beam **42.** By way of example and without limitation, the connection fixtures **102** may extend upward from the second circuit board **100** and may be configured to engage holes **104** in the beam **42.** In some embodiments, one of more spacers **106** may be disposed between the beam **42** and the second circuit board **100.** The spacers **106** may be made from an electrically insulating material, such as plastic, for example.

The second circuit board **100** includes a second substrate **108** and a second electrical circuit **110** that is disposed on the second substrate **108.** For example, the second circuit board **100** may be a printed circuit board (PCB), where the second electrical circuit **110** is formed by conductive traces that are printed on the second substrate **108** of the second circuit board **100.** The one or more wires **92** of the temperature sensor **80** are electrically connected to the second electrical circuit **110.** For example and without limitation, the wires **92** of the temperature sensor 80 may be soldered to the conductive traces forming the second electrical circuit 110. As such, the second electrical circuit **110** receives the temperature signals from the temperature sensor(s) **80.** The second electrical circuit **110** may be configured to process the temperature signals itself or may simply be configured to transmit the temperature signals to the controller **30.** Accordingly, in various embodiments, the induction cooking apparatus **20** may include an electronic interface between the first circuit board **64** and the second circuit board **100** that is configured to pass signals (e.g. temperature signals) from the second circuit board **100** to the first circuit board **64.**

The second circuit board **100** includes one or more cantilevered leaf-spring structures **112** that support the temperature sensors **80.** Each cantilevered leaf-spring structure **112** is integral with the second substrate **108** and is formed by a U-shaped slot **114** that extends through the second circuit board **100.** The cantilevered leaf-spring structure **112** therefore operates as a living hinge. The cantilevered leaf-spring structure **112** includes a cantilever arm **116** that extends to a cantilever end **118,** which is a free or terminal end that is not connected to the second circuit board **100** except through the cantilever arm **116.** The second substrate **108** of the second circuit board **100** is made of a resilient material such that the cantilevered leaf-spring structure **112** can deflect or bend relative to a lateral plane **120** defined by the second circuit board **100.** By way of non-limiting example, some materials that may be utilized for the second substrate **108** include but are not limited to: FR-1, FR-4, FR-5, G-10, and G-11.

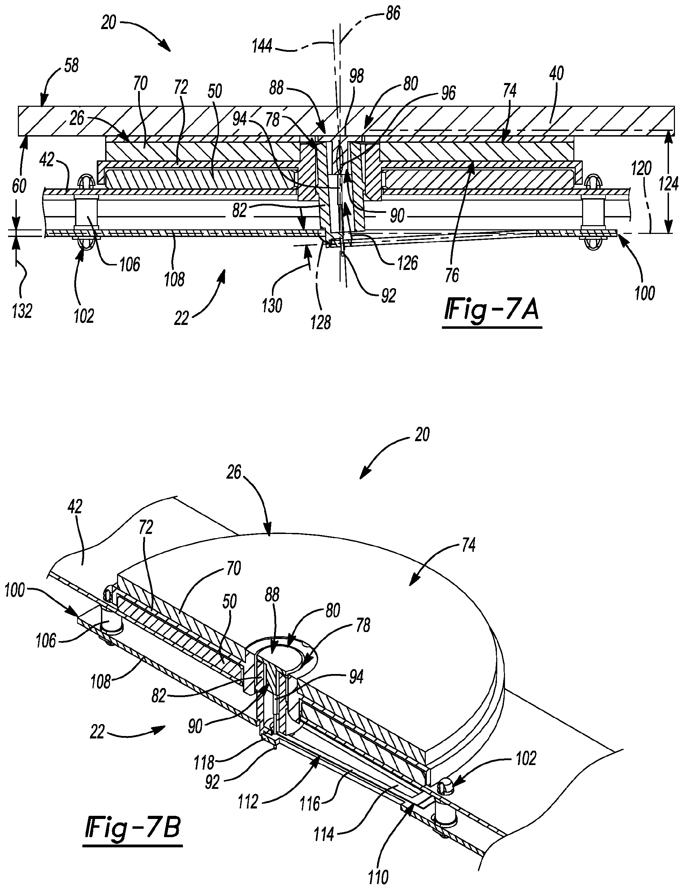

Figures 6A and 6B illustrate the cantilevered leaf-spring structure **112** in its natural state before deflection, such as prior to installation of the cooktop panel **40** over the burner box **44.** As shown in Figures 7A and 7B, after the cooktop panel **40** is installed over the burner box **44,** the lower surface **60** of the cooktop panel **40** and the second circuit board **100** are vertically spaced by a predetermined distance **122** that is less than a mounting height **124** of the temperature sensor **80.** As a result, when the cooktop **24** is in a fully assembled state, the cantilevered leaf-spring structure **112** is downwardly flexed and applies a biasing force **126** to the temperature sensor **80** that is directed upwards towards the cooktop panel **40.** In operation, this biasing force **126** holds the upper end **88** of the temperature sensor **80** flat against the lower surface **60** of the cooktop panel **40** for accurate temperature readings. Because the cantilevered leaf-spring structure **112** is flexible, it accounts for dimensional variations due to manufacturing tolerances and the thermal expansion and contraction of components of the cooktop **24,** including during use. When the cantilevered leaf-spring structure **112** flexes, it should be appreciated that the cantilever end **118** travels in an arc shaped path **128,** as shown in Figure 7A.

By including a second circuit board **100** for the temperature sensors **80,** which is separate and distinct from the first circuit board **64** powering the induction coils **26,** packaging constraints are avoided. For example, space on the first circuit board **64** is crowded by numerous electronic components, making it difficult to find room for the U-shaped slot **114** and cantilevered leaf-spring structure **112** that is connected to each temperature sensor **80.** By providing a second circuit board **100** for the temperature sensors **80,** sufficient room is created for the cantilevered leaf-spring structures **112.** In addition, the thickness and material composition of the second circuit board **100** can be selected to specifically provide the desired mechanical properties of the cantilevered leaf-spring structure(s) **112.** In accordance with some embodiments, the second circuit board **100** may be designed such that each cantilevered leaf-spring structure **112** can apply a maximum biasing force **126** of 40 - 60 grams to each corresponding temperature sensor **80** at a maximum deflection or stroke **130** of 1.0 - 1.4 millimeters. For example, the second circuit board **100** may be manufactured to have a thickness **132** in the range of 0.8 - 1.2 millimeters, and be composed of materials with appropriate mechanical properties, such as FR-4. Because the first circuit board **64** supports many other electrical components, cost and other factors provide constraints on the thickness and material composition of the first circuit board **64,** which are not present when a second, standalone, circuit board is added for the temperature sensors **80.** For example, the industry standard for printed circuit boards in this technology area have a thickness of 1.6 millimeters. As a result, manufacturing efficiencies and cost savings are realized by providing a second, standalone, circuit board for the temperature sensors **80.**

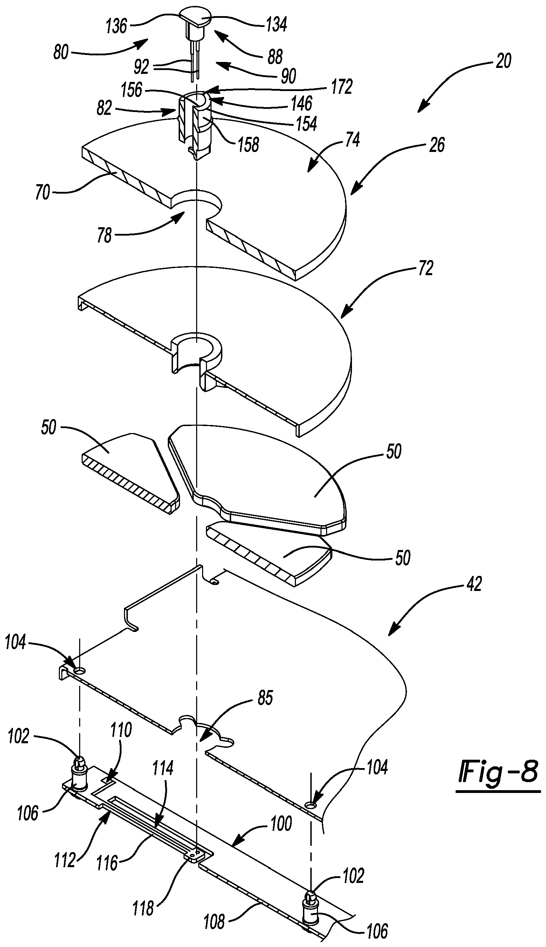

With further reference to Figures 8-10, the upper end **88** of the temperature sensor **80** includes a topside surface **134** that contacts the lower surface **60** of the cooktop panel **40** and a flange **136** with an underside surface **138.** The flange **136** of the temperature sensor **80** is part of the sensor enclosure **98** as opposed to being part of the thermistor **96.** Although other configurations may be possible, in the illustrated embodiment, the cantilever arm **116** has a narrower width **140** than cantilever end **118.** In addition, each temperature sensor **80** includes two wires **92** at its lower end **90** that are received in the two holes **142** in the cantilever end **118.** Some of the conductive traces forming the second electrical circuit **110** run down the cantilever arm **116** to the cantilever end **118** and the wires **92** of the temperature sensor **80** are electrically connected to the second electrical circuit **110** at the cantilever end **118** by soldering, for example.

The guiding support **82** is positioned in the opening **78** of the induction coil **26** with the temperature sensor **80.** The guiding support **82,** which may be made of plastic, extends coaxially about a guiding support axis **144** between a top end **146** that is disposed in contact with the upper end **88** of the temperature sensor **80** and a bottom end **148** that is disposed in contact with the cantilevered leaf-spring structure **112** of the second circuit board **100.** As a result, the guiding support **82** is load bearing and is configured to transmit the biasing force **126** generated by deflection of cantilevered leaf-spring structure **112** to the upper end **88** of the temperature sensor **80.** Although other configurations may be possible, in the illustrated embodiment, the guiding support **82** has a tubular structure that circumscribes at least a portion of the temperature sensor **80** and is positioned in sliding engagement with the opening **78** in the induction coil **26.** There is a clearance fit between the guiding support **82** and the temperature sensor **80** and between the guiding support **82** and the opening **78** in the induction coil **26** such that the guiding support **82** is permitted to slide, tilt, and gimbal relative to the temperature sensor **80.** Preferably, the tubular structure of the guiding support **82** includes an outer face **150** with an annular rib **152** that provides a sliding point or line contact with the induction coil **26** in the opening **78.**

As best seen in Figures 7A and 7B, after assembly, the top end **146** of the guiding support **82** is disposed in contact with the flange **136** of the temperature sensor **80** and the bottom end **148** of the guiding support **82** is disposed in contact with the cantilever end **118** such that the biasing force **126** that the cantilevered leaf-spring structure **112** provides when flexed is transmitted through the guiding support **82** to the flange **136** at the upper end **88** of the temperature sensor **80.** As best seen in Figure 8, the top end **146** of guiding support **82** includes an end face **154** that is bounded by an inner circumferential edge **156** and an outer circumferential edge **158.** Preferably, the end face **154** is chamfered (i.e., sloped) with a peak formed at a top edge **172,** which in illustrated example extends radially across the end face **154** from inner circumferential edge **156** to the outer circumferential edge **158.** In accordance with this arrangement, the top edge **172** of the end face **154** provides a sliding point or line contact with an underside surface **138** of the flange **136** of the temperature sensor **80.** In other words, a line contact between the top edge **172** of the guiding support **82** and the underside surface **138** of the flange **136** of the temperature sensor **80** may be provided when the guiding support axis **144** is perpendicular to the flange **136** such as when the top edge **172** is resting flat against the underside surface **138** of the flange **136.**

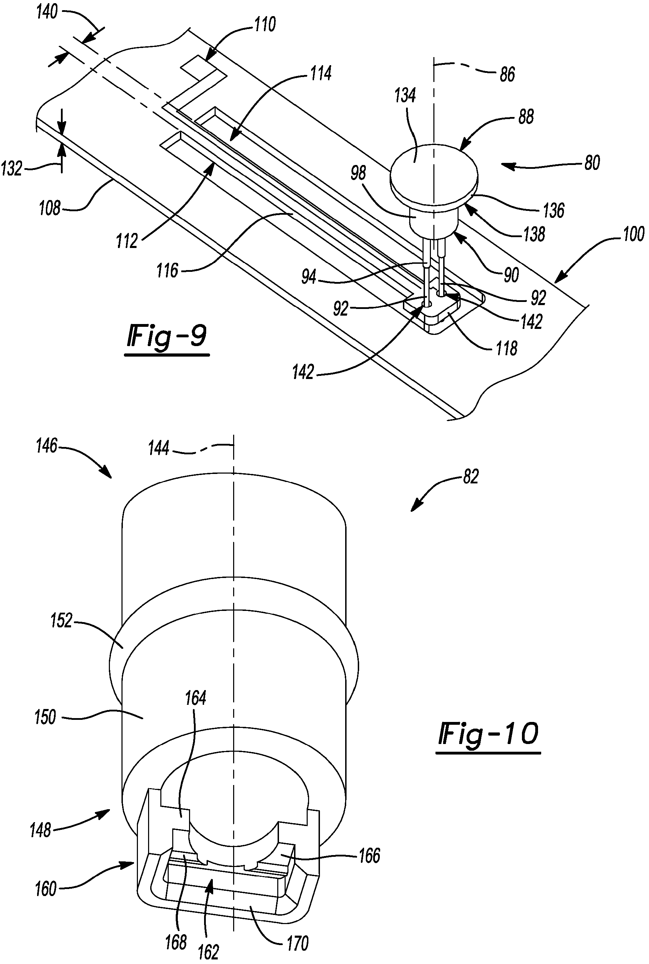

As best seen in Figure 10, the bottom end **148** of the guiding support **82** includes an engagement feature **160** that extends downwardly from the tubular structure of the guiding support **82.** The engagement feature **160** at the bottom end **148** of the guiding support **82** defines a pocket **162** that receives the cantilever end **118** of the cantilevered leaf-spring structure **112** in a sliding fit. As a result, the engagement feature **160** and the cantilever end **118** cooperate to form a free fitting hinge between the guiding support **82** and the cantilevered leaf-spring structure **112,** which permits the guiding support **82** to slide, tilt, and gimbal relative to the temperature sensor **80** and cantilevered leaf-spring structure **112.** The engagement feature **160** includes a shoulder **164** that defines a bottom face **166** of the pocket **162.** Preferably, the bottom face **166** includes a straight rib **168** that provides a sliding point or line contact with the cantilever end **118.** The engagement feature **160** may also include a bottom inside edge **170** that is chamfered to aid in assembly and permit a greater range of movement between the guiding support **82** and the cantilever end **118.**

In accordance with this arrangement, the guiding support **82** is free to slide, tilt, and gimbal relative to both the temperature sensor **80** and the cantilevered leaf-spring structure **112** while remaining a load bearing structure that transmits the biasing force **126** created by the deflection of the cantilevered leaf-spring structure **112** to the flange **136** at the upper end **88** of the temperature sensor **80.** Said another way, the guiding support **82** can move and tilt independently of the temperature sensor **80** and the cantilevered leaf-spring structure **112.** Advantageously, this takes the load off the temperature sensor **80** and specifically the connection between the wires **92** at the lower end **90** of the temperature sensor **80** and the cantilever end **118.** As previously explained, the connection between the wires **92** at the lower end **90** of the temperature sensor **80** and the cantilever end **118** may be, for example, a soldered connection, which can fail under load. In operation, the guiding support **82** takes the load of the wires **92** and this connection and therefore provides greater durability.

Many modifications and variations of the apparatus and assemblies described in the present disclosure are possible in light of the above teachings and may be practiced otherwise than as specifically described while within the scope of the appended claims. These antecedent recitations should be interpreted to cover any combination in which the inventive novelty exercises its utility. In addition, the reference numerals in the claims are merely for convenience and are not to be read in any way as limiting.

## Claims

1. An induction cooking apparatus (20) comprising:
an induction coil (26) with a top surface (74);
a controller (30) including a first circuit board (64) that is electrically connected to said induction coil (26) and that is configured to supply electricity to said induction coil (26);
a temperature sensor (80) having an upper end (88) that sits above said top surface (74) of said induction coil (26); and
a second circuit board (100), separate from said first circuit board (64), that is electrically connected to said temperature sensor (80), said second circuit board (100) including a cantilevered leaf-spring structure (112) that supports said temperature sensor (80).

2. The induction cooking apparatus (20) as set forth in claim 1, wherein said second circuit board (100) includes a substrate (108) and said cantilevered leaf-spring structure (112) is integral with said substrate (108) of said second circuit board (100).

3. The induction cooking apparatus (20) as set forth in claim 2, further comprising:
a cooktop panel (40) positioned above said induction coil (26),
said cooktop panel (40) having an upper surface (58) and a lower surface (60); and
said substrate (108) of said second circuit board (100) being made of a resilient material such that said cantilevered leaf-spring structure (112) applies a biasing force (126) to said temperature sensor (80) when flexed to operably hold said upper end (88) of said temperature sensor (80) in contact with said lower surface (60) of said cooktop panel (40).

4. The induction cooking apparatus (20) as set forth in claim 3, wherein said lower surface (60) of said cooktop panel (40) and said second circuit board (100) are vertically spaced by a predetermined distance (122) that is less than a mounting height (124) of said temperature sensor (80) such that said cantilevered leaf-spring structure (112) is downwardly flexed in a fully assembled state and said biasing force (126) of said cantilevered leaf-spring structure (112) is directed upwards towards said cooktop panel (40).

5. The induction cooking apparatus (20) as set forth in claim 3, wherein said cooktop panel (40) is made of glass or a glass-ceramic material and said upper surface (58) of said cooktop panel (40) is configured to support cookware (36).

6. The induction cooking apparatus (20) as set forth in claim 1, wherein said second circuit board (100) is mounted above said first circuit board (64) and below said induction coil (26).

7. The induction cooking apparatus (20) as set forth in claim 6, further comprising:
a beam (42) extending laterally between a first beam end (46) and a second beam end (48),
wherein said induction coil (26) is mounted above said beam (42) and is supported by said beam (42), and
wherein said second circuit board (100) is mounted below said beam (42) and is supported by said beam (42).

8. The induction cooking apparatus (20) as set forth in claim 7, further comprising:
a burner box (44) having a bottom wall (52) and side walls (54) that extend upwardly from said bottom wall (52),
wherein said controller (30) is mounted to and supported by said bottom wall (52) of said burner box (44), and
wherein said beam (42) is supported within said burner box (44) at a position that is spaced above said first circuit board (64).

9. The induction cooking apparatus (20) as set forth in claim 1, wherein said induction coil (26) includes a bottom surface (76) and an opening (78) that extends through said induction coil (26) from said top surface (74) to said bottom surface (76) and wherein said temperature sensor (80) is positioned in and extends through said opening (78) in said induction coil (26).

10. The induction cooking apparatus (20) as set forth in claim 9, further comprising:
a guiding support (82) positioned in said opening (78) of said induction coil (26) with said temperature sensor (80);
said guiding support (82) including a top end (146) that is disposed in contact with said upper end (88) of said temperature sensor (80) and a bottom end (148) that is disposed in contact with said cantilevered leaf-spring structure (112) of said second circuit board (100) such that said guiding support (82) is load bearing and is configured to transmit a biasing force (126) generated by deflection of said cantilevered leaf-spring structure (112) to said upper end (88) of said temperature sensor (80).

11. The induction cooking apparatus (20) as set forth in claim 10, wherein said guiding support (82) has a tubular structure that circumscribes at least a portion of said temperature sensor (80) and is positioned in sliding engagement with said opening (78) in said induction coil (26).

12. The induction cooking apparatus (20) as set forth in claim 11, wherein there is a clearance fit between said guiding support (82) and said temperature sensor (80) and between said guiding support (82) and said opening (78) in said induction coil (26) such that said guiding support (82) is permitted to slide, tilt, and gimbal relative to said temperature sensor (80).

13. The induction cooking apparatus (20) as set forth in claim 12, wherein said temperature sensor (80) has a lower end (90) and a flange (136), said cantilevered leaf-spring structure (112) includes a cantilever end (118), said top end (146) of said guiding support (82) is disposed in contact with said flange (136) of said temperature sensor (80), and said bottom end (148) of said guiding support (82) is disposed in contact with said cantilever end (118) such that said biasing force (126) that is generated by said cantilevered leaf-spring structure (112) is transmitted through said guiding support (82) to said flange (136) of said temperature sensor (80).

14. The temperature sensor assembly (22) as set forth in claim 13, wherein said bottom end (148) of said guiding support (82) includes an engagement feature (160) that extends downwardly from said tubular structure of said guiding support (82) and that defines a pocket (162) that receives said cantilever end (118) of said cantilevered leaf-spring structure (112) in a sliding fit such that said engagement feature (160) and said cantilever end (118) cooperate to form a free fitting hinge between said guiding support (82) and said cantilevered leaf-spring structure (112) that permits said guiding support (82) to slide, tilt, and gimbal relative to said temperature sensor (80).

15. The temperature sensor assembly (22) as set forth in claim 14, wherein said pocket (162) includes an bottom face (166) with a straight rib (168) that provides a first sliding point or line contact with said cantilever end (118), wherein said guiding support (82) said tubular structure of said guiding support (82) includes an outer face (150) with an annular rib (152) that provides a second sliding point or line contact with said opening (78) in said induction coil (26), wherein said top end (146) of guiding support (82) includes an end face (154) that is bounded by an inner circumferential edge (156) and an outer circumferential edge (158), and wherein said end face (154) is chamfered such that a third sliding point or line contact is created between said end face (154) of said guiding support (82) and said flange (136) of said temperature sensor (80).
